(19) Europäisches Patentamt
European Patent Office
Office européen des brevets

(11) **EP 3 262 936 A1**

(12) **EUROPEAN PATENT APPLICATION**
published in accordance with Art. 153(4) EPC

(43) Date of publication:
**03.01.2018 Bulletin 2018/01**

(21) Application number: **16752376.0**

(22) Date of filing: **10.02.2016**

(51) Int Cl.:
*A01N 25/04* (2006.01)     *A01N 41/10* (2006.01)
*A01N 43/56* (2006.01)     *A01P 7/00* (2006.01)
*A01P 13/00* (2006.01)     *A01N 43/40* (2006.01)

(86) International application number:
**PCT/JP2016/053980**

(87) International publication number:
**WO 2016/132990 (25.08.2016 Gazette 2016/34)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **19.02.2015 JP 2015030643**

(71) Applicant: **Nihon Nohyaku Co., Ltd.**
**Tokyo 104-8386 (JP)**

(72) Inventors:
• **MAEDA, Kazuya**
**Kawachinagano-shi**
**Osaka 586-0094 (JP)**
• **TAKATORI, Naohiko**
**Kawachinagano-shi**
**Osaka 586-0094 (JP)**

(74) Representative: **Abel & Imray**
**Westpoint Building**
**James Street West**
**Bath BA1 2DA (GB)**

(54) **OILY SUSPENSION COMPOSITION AND METHOD FOR PRODUCING SAME**

(57)     There are provided an oily suspension composition that can achieve improved long-term storage stability, improved water-dispersibility and suspensibility for use after dilution, and an improved pharmacological effect of a solid active ingredient, and comprises a pulverized solid agrochemical active ingredient, and a provided method for efficiently producing such compositions. The oily suspension composition comprising a suspension comprising a pulverized active ingredient such as an agrochemical which is obtained by subjecting a solid active ingredient to wet grinding in water, an oily dispersion medium, and various emulsifiers and thickeners, and the like.

**Description**

TECHNICAL FIELD

The present invention relates to an oily suspension composition containing an active ingredient of an agrochemical, for example, and a method for producing the oily suspension composition.

BACKGROUND ART

Conventionally, oily suspension formulations have been extensively studied in agrochemicals or pharmaceuticals, cosmetics, and other fields. An oily suspension formulation, because of its high oily content, is advantageous in terms of improving the efficacy, spreadability, prolonged action, and the like of an active ingredient, whereas it is disadvantageous in that separation tends to occur in the formulation because the solid component readily aggregates, or readily forms a sediment or hard cake. The oily suspension formulation may therefore deteriorate in quality after long-term storage.

Furthermore, the oily suspension formulation has very poor compatibility with water because an oily component is used as the dispersion medium. Thus, when the oily suspension formulation is diluted with water before use, separation of the oily phase and the aqueous phase may occur to cause a concentration gradient of the active ingredient. As a result, problems such as phytotoxicity due to uneven application or variations in efficacy tend to occur. Furthermore, the oily suspension formulation can be produced as follows: A solid active ingredient is dispersed in an oily dispersion medium and/or a mixture of other active agent and an oily dispersion medium to form an oily suspension, and then the oily suspension is subjected to wet grinding. Alternatively, an active ingredient is coarsely ground beforehand to an average particle diameter of about 20 to 50 $\mu$m in a dry grinding machine. Then the oily suspension may be mixed with an oily dispersion medium or the like, and the mixture is again subjected to wet grinding treatment. These processes, however, have poor grinding efficiency, and require a long time for production. Moreover, the average particle diameter of the active ingredient in the oily suspension formulation actually produced as described above is about 1.5 to 15 $\mu$m (for example, Patent Documents 1 and 2). Thus, grinding is insufficient for an active ingredient that needs to have a smaller particle diameter, which may result in a failure to derive sufficient performance from the active ingredient.

Prior Art Documents

Patent Documents

Patent Document 1: Japanese Patent Application Publication No. 2001-316202 (JP 2001-316202 A)
Patent Document 2: Japanese Patent Application Publication No. H06-056602 (JP H06-056602 A)

SUMMARY OF THE INVENTION

Problem to be Solved by the Invention

An object of the present invention is to provide an oily suspension composition that can achieve improved storage stability, improved dispersibility and suspensibility upon dilution with water, and an improved effect of a solid active ingredient, and provide a method for efficiently producing such compositions.

Means for Solving the Problem

The present inventors conducted extensive research to solve the aforementioned problem, and consequently found that an active ingredient (in particular, an agrochemical active ingredient) is more efficiently pulverized by means of wet grinding in water (grinding the active ingredient in water), rather than in an oily dispersion medium (grinding the solid active ingredient in an oily dispersion medium), and that the aforementioned problem is solved by an oily suspension composition that contains the suspension containing the pulverized active ingredient, an emulsifier, a thickener, and an oily dispersion medium, thus completing the present invention.

In summary, the present invention relates to:

[1] an oily suspension composition characterized by comprising (A) a suspension comprising an active ingredient pulverized in water, (B) an emulsifier, (C) a thickener, and (D) an oily dispersion medium;

[2] the oily suspension composition according to [1], characterized in that the emulsifier (B) is at least one emulsifier selected from polyoxyalkylene sorbitol fatty acid esters and polyoxyalkylene castor oils;

[3] the oily suspension composition according to [1] or [2], wherein the thickener (C) is bentonite;

[4] the oily suspension composition according to any one of [1] to [3], wherein the oily dispersion medium (D) is at least one dispersion medium selected from vegetable oils, animal oils, and ester compounds thereof;

[5] the oily suspension composition according to any one of [1] to [4], wherein the active ingredient pulverized in water is a solid active ingredient;

[6] the oily suspension composition according to any one of [1] to [5], wherein the active ingredient pulverized in water is a solid agrochemical active ingredient that is poorly soluble in water and oils;

[7] the oily suspension composition according to any one of [1] to [6], wherein the active ingredient pulverized in water is an agrochemical active ingredient, which is a solid organic compound that is poorly soluble in water and oils;

[8] the oily suspension composition according to any one of [1] to [6], wherein the active ingredient pulverized in water is an agrochemical active ingredient, which is a solid inorganic compound that is poorly soluble in water and oils;

[9] the oily suspension composition according to any one of [1] to [8], wherein the oily dispersion medium (D) is at least one dispersion medium selected from soybean oil, rapeseed oil methyl ester, and methyl oleate;

[10] the oily suspension composition according to any one of [1] to [9], wherein the active ingredient pulverized in water is sulfur, basic copper sulfate, pyraflufen-ethyl, flubendiamide, tolfenpyrad, fluoroimide, flutolanil, fenoxanil, tiadinil, buprofezin, isoprocarb, fenobucarb, fenpyroximate, tebufenpyrad, pyrifluquinazon, chlorphthalim, indanofan, isouron, orthosulfamuron, pyriprole, pyflubumide, pyraziflumid and 5-(1,3-dioxan-2-yl)-4-[4-(trifluoromethyl)]benzyloxypyrimidine, or metaflumizone;

[11] the oily suspension composition according to any one of [1] to [10], wherein the active ingredient pulverized in water is pyraflufen-ethyl, flutolanil, fenpyroximate, orthosulfamuron, flubendiamide, or metaflumizone;

[12] a method for producing the oily suspension composition according to any one of [1] to [11], characterized by comprising the steps of (a) subjecting a mixture comprising an active ingredient and water to wet grinding to obtain a suspension (A) comprising the active ingredient pulverized in water; and (b) mixing the suspension (A) obtained in the step (a) with an emulsifier (B), a thickener (C), and an oily dispersion medium (D);

[13] the method for producing the oily suspension composition according to [12], wherein the active ingredient is pulverized to an average particle diameter of 0.1 to 5 $\mu$m by the wet grinding in the step (a);

[14] the method for producing the oily suspension composition according to [12] or [13], wherein the active ingredient pulverized in water is a solid agrochemical active ingredient; and

[15] an agrochemical comprising the oily suspension composition according to any one of [1] to [11].

Effects of the Invention

According to the present invention, an oily suspension composition can be provided which can achieve increased efficiency of the pulverization step of an active ingredient, in particular, an agrochemical active ingredient, compared to the prior art, exhibits an improved effect of the active ingredient by means of the pulverization, exhibits excellent storage stability, is free of sedimentation or aggregation of a particulate solid component such as the active ingredient, and can stably maintain dispersibility and emulsifiability even when it is diluted with water.

MODES FOR CARRYING OUT THE INVENTION

The oily suspension composition of the present invention (hereinafter referred to as the "composition of the present invention") is characterized by comprising an active ingredient pulverized in water, an emulsifier, a thickener, and an oily dispersion medium. The composition of the present invention contains, as dispersion media, the oily dispersion medium and water used for pulverizing the active ingredient. These two dispersion media are separated into two layers because of a difference in specific gravity, which inevitably results in the problem of separation in the formulation. Whereas, the below-described combination of an emulsifier and a thickener allows the particles of an active ingredient, in particular, an agrochemical active ingredient, to maintain a homogeneously dispersed state even in a mixed dispersion medium of an oily dispersion medium and water, and allows this state to be maintained for a long time even when diluted with water before use.

The emulsifier (B) that can be used in the composition of the present invention is used to improve the storage stability of the oily suspension composition, suppress sedimentation or aggregation of a solid component, and maintain the active ingredient such as an agrochemical and the oily dispersion medium in a preferred emulsified state when the composition of the present invention is diluted with water. In particular, a surfactant is preferred. Examples of such surfactants include nonionic surfactants, anionic surfactants, cationic surfactants, and amphoteric surfactants.

Examples of nonionic surfactants include vegetable oil-type nonionic surfactants, alcohol-type nonionic surfactants, polyoxyethylene-polyoxypropylene block polymer-type nonionic surfactants, alkyl phenol-type nonionic surfactants, sugar ester-type nonionic surfactants, fatty acid ester-type nonionic surfactants, bisphenol-type nonionic surfactants, polyaromatic ring-type nonionic surfactants, silicone-type nonionic surfactants, and fluorine-type nonionic surfactants. Examples of vegetable oil-type nonionic surfactants include hydrogenated castor oils, polyoxyalkylene castor oils (e.g., polyoxyethylene castor oil), and polyoxyalkylene hydrogenated castor oils (e.g., polyoxyethylene hydrogenated castor oil). Examples of alcohol-type nonionic surfactants include polyoxyethylene alkyl ethers. Examples of polyoxyethylene-polyoxypropylene block polymer-type nonionic surfactants include polyoxyethylene-polyoxypropylene block polymers, alkylpolyoxyethylene-polyoxypropylene block polymer ethers, and alkaliphenylpolyoxyethylene-polyoxypropylene block polymer ethers. Examples of alkyl phenol-type nonionic surfactants include polyoxyethylene alkyl phenyl ethers, polyoxyethylene dialkyl phenyl ethers, and polyoxyethylene alkyl phenyl ether-formalin condensates. Examples of sugar ester-type nonionic surfactants include sorbitan fatty acid esters, polyoxyethylene sorbitan aliphatic esters, polyoxyalkylene sorbitol fatty acid esters (e.g., polyoxyethylene sorbitol fatty acid esters), glycerol fatty acid esters, and sucrose fatty acid esters. Examples of fatty acid ester-type nonionic surfactants include polyoxyethylene fatty acid esters, polyoxyethylene resin acid esters, and polyoxyethylene fatty acid diesters. Examples of bisphenol-type nonionic surfactants include polyoxybisphenyl ethers. Examples of polyaromatic ring-type nonionic surfactants include polyoxyalkylene benzyl phenyl ethers and polyoxyalkylene styryl phenyl ethers. Examples of silicone-type nonionic surfactants include polyoxyethylene ether-type silicone-based surfactants and polyoxyethylene ester-type silicone-based surfactants.

Examples of anionic surfactants include sulfate-type anionic surfactants, sulfonate-type anionic surfactants, phosphate-type anionic surfactants, and carboxylic acid-type anionic surfactants. Examples of sulfate-type anionic surfactants include alkyl sulfates, polyoxyethylenealkyl ether sulfates, polyoxyethylenealkyl phenyl ether sulfates, polyoxyethylenestyryl phenyl ether sulfates, and polyoxyethylene-polyoxypropylene block polymer sulfates. Examples of sulfonate-type anionic surfactants include paraffin sulfonates, dialkyl sulfosuccinates, alkylbenzenesulfonates, monoalkylnaphthalenesulfonates, dialkylnaphthalenesulfonates, naphthalenesulfonate-formalin condensates, alkyl diphenyl ether disulfonates, and polyoxyethylene alkyl phenyl ether sulfonates. Examples of phosphate-type anionic surfactants include polyoxyethylenealkyl ether phosphates, polyoxyethylenemonoalkyl phenyl ether phosphates, polyoxyethylenedialkyl phenyl ether phosphates, polyoxyethylenestyryl phenyl ether phosphates, polyoxyethylene-polyoxypropylene block polymer phosphates, and alkylphosphates. Examples of carboxylic acid-type anionic surfactants include fatty acid sodium, fatty acid potassium, fatty acid ammonium, N-methyl-sarcosinate, sodium resinate, and potassium resinate.

Examples of cationic surfactants include ammonium-type cationic surfactants and benzalkonium-type cationic surfactants. Examples of ammonium-type cationic surfactants include alkyltrimethylammonium chloride, methyl polyoxyethylene alkyl ammonium chloride, alkyl N-methylpyridinium bromide, mono- or di-alkylmethylated ammonium chloride, and alkylpentamethylpropylenediamine chloride. Examples of benzalkonium-type cationic surfactants include alkyldimethylbenzalkonium chloride, benzethonium chloride, and octylphenoxyethoxyethyldimethylbenzylammonium chloride.

Examples of amphoteric surfactants include betaine-type amphoteric surfactants. Examples of betaine-type amphoteric surfactants include dialkyldiaminoethyl betaine and alkyldimethylbenzyl betaine.

From the viewpoint of allowing the active ingredient such as an agrochemical to be emulsified and dispersed well in the oily dispersion medium, and allowing the emulsified state to be stably maintained even when diluted with water, preferred among these surfactants are polyoxyalkylene sorbitol fatty acid esters (e.g., polyoxyethylene sorbitol fatty acid esters), polyoxyalkylene castor oils (e.g., polyoxyethylene castor oil), polyoxyalkylene hydrogenated castor oils (e.g., polyoxyethylene hydrogenated castor oil), sorbitan fatty acid esters, polyoxyalkylene sorbitan fatty acid esters (e.g., polyoxyethylene sorbitan fatty acid esters), dialkyl or dialkenyl sulfosuccinates, fatty acid glycerides, and polyoxyalkylene glycerol fatty acid esters (e.g., polyoxyethylene glycerol fatty acid esters), and more preferred are polyoxyethylene sorbitol fatty acid esters and polyoxyethylene castor oil. Two or more of these surfactants can be used in combination. The amount of the emulsifier is preferably 5 to 40% by mass based on the total amount of the oily suspension composition.

A thickener can be used for the purpose of improving the storage stability of the composition of the present invention, suppressing sedimentation or aggregation of a solid component, and maintaining the active ingredient and the oily dispersion medium in a preferred emulsified state when the composition of the present invention is diluted with water.

Examples of the thickener (C) that can be used include polymeric thickeners and inorganic thickeners. Examples of polymeric thickeners include xanthan gum, welan gum, rhamsan gum, guar gum, locust bean gum, tragacanth gum, and diutan gum. Examples of inorganic thickeners include white carbon, bentonite, colloidal silica, and colloidal hydrated magnesium aluminum silicate. Other examples that can serve as thickeners include sugar fatty acid esters (e.g., dextrin palmitate and inulin stearate), higher fatty acids (e.g., sodium stearate), PEG, synthetic waxes, fatty acid amides, hydrogenated castor oils, pullulan, pectin, arabinogalactan, casein, tara gum, gum arabic, tamarind gum, karaya gum, starch, sodium alginate, carrageenan, celluloses (e.g., carboxymethyl cellulose, carboxyethyl cellulose, methyl cellulose, hydroxypropyl cellulose, and hydroxyethyl cellulose), polyvinyl alcohol, and polyacrylic acids. Two or more of these thickeners can be used in combination. Among the above, bentonite is preferred. Depending on the type of the active ingredient, the resulting formulation may have a low viscosity, such that a "gap" tends to form in an upper part of the suspension because of particle sedimentation. To prevent this, the proportion of the thickener may be increased to increase the viscosity. The proportion of the thickener itself in the entire composition is typically about 0.01 to 10% by mass, and preferably about 0.03 to 5% by mass.

In the composition of the present invention, an oily dispersion medium is used. Among usable oily dispersion media, examples of animal oils include whale oil, cod liver oil, musk oil, and mink oil.

Examples of vegetable oils that can be used in the composition of the present invention include soybean oil, rapeseed oil, corn oil, corn oil, sunflower oil, cotton seed oil, linseed oil, coconut oil, palm oil, safflower oil, walnut oil, arachis oil, olive oil, papaya oil, camellia oil, coconut oil, sesame oil, rice bran oil, peanut oil, linseed oil, tung oil, sunflower oil, castor oil, and esters such as lactates. Vegetable oils also include transesterification products thereof, including, for example, methyl oleate, rapeseed oil methyl ester, and rapeseed oil ethyl ester.

Examples of mineral oils that can be used in the composition of the present invention include mineral oils such as 1,3,5,-trimethylbenzene, methylnaphthalene, 1-phenyl-1-xylylethane, and dodecylbenzene. Two or more of these oily dispersion media can be used in combination.

Among these oily dispersion media (D), methyl oleate, soybean oil, and rapeseed oil methyl ester are preferred. The oily dispersion medium (D) is preferably used in an amount of 10 to 80% by mass, and preferably 30 to 50% by mass, based on the entire composition of the present invention.

An optimal combination of the emulsifier (B), thickener (C), and oily dispersion medium (D) is preferably a polyoxyethylene sorbitol fatty acid ester and/or polyoxyethylene castor oil as the emulsifier, bentonite as the thickener, and methyl oleate, soybean oil, and/or rapeseed oil methyl ester as the oily dispersion medium.

In the method for producing the composition of the present invention, the active ingredient is initially ground in water. The suspension (A) containing the pulverized active ingredient, in particular, an agrochemical active ingredient, can be produced using a method commonly used for the production of agrochemical formulations ("*Nouyaku Seizai Gaido*" ("Manual for Agrochemical Formulations"), p. 37, Japan Plant Protection Association). Examples of such methods include, although not limited to, a method in which the active ingredient such as an agrochemical to be contained in the composition of the present invention is mixed into water blended with components including a surfactant such as a wetting agent and a thickener, and the mixture is pulverized in a wet grinding machine such as Viscomill, Sand Grinder (both from AIMEX Corporation), Attritor (from Mitsui Miike Machinery Co., Ltd.), or DYNO-MILL Type KDL (from WILLY A Bachofen AG); a method in which the dispersion obtained by means of the pulverization treatment in a wet grinding machine as described above is further adjusted by the addition of an aqueous dispersion of a surfactant or the like; and a method in which a solid active ingredient to be contained in the composition of the present invention is ground beforehand to a certain extent in a dry grinding machine, and then dispersed in water with other components such as a surfactant, and the dispersion is subsequently pulverized in the above-described wet grinding machine. In general, grinding in water results in finer pulverization in a shorter time with higher grinding efficiency, compared to grinding in an oily dispersion medium.

The active ingredient, in particular, an agrochemical active ingredient, in the composition of the present invention is preferably pulverized to an average particle diameter of 5 $\mu$m or less, more preferably 0.1 to 3 $\mu$m, and still more preferably 0.1 to 1 $\mu$m. As used herein, the term "average particle diameter" refers to the average particle diameter of an equivalent diameter such as the Stokes' diameter, the light scattering equivalent diameter, the diffusion equivalent diameter, the volume equivalent spherical diameter, the surface area equivalent spherical diameter, the equivalent circular area diameter, or the equivalent circular perimeter diameter, and preferably the surface area equivalent spherical diameter or the light scattering equivalent diameter. The light scattering equivalent diameter specifically refers to a particle diameter measured using the laser diffraction/scattering method or the dynamic light scattering method. The particle shape can be preferably confirmed using electron microscopic observation in combination. Furthermore, the average particle diameter of the active ingredient of the present invention means the median diameter with a cumulative percentage of 50%, which is measured using the above-described laser diffraction/scattering method that involves measuring the average particle diameter by passing a suspension in which particles are dispersed through a laser beam path to generate a diffraction pattern of the passing particles on a lens, detecting the diffraction pattern with a detector, and analyzing the resulting diffraction light intensity distribution.

The above-described range of average particle diameters is preferably adopted herein because, when the average particle diameter of the pulverized active ingredient is 0.1 to 5 $\mu$m, the grinding efficiency is improved, and the average particle diameter can be readily adjusted.

During such grinding, a wetting agent can be used to efficiently pulverize the active ingredient, in particular, an agrochemical active ingredient. Any wetting agents used in general formulations can be used without particular limitation, and examples of such wetting agents include nonionic surfactants such as sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene alkyl ethers, polyoxyethylene alkyl aryl ethers, polyoxyethylene alkyl phenyl ethers, polyoxyethylene dialkyl phenyl ethers, polyoxyethylene alkyl phenyl ether-formalin condensates, polyoxyethylene-polyoxypropylene block copolymers, polystyrene-polyoxyethylene block polymers, alkyl polyoxyethylene-polypropylene block copolymer ethers, polyoxyethylenealkylamines, polyoxyethylene fatty acid amides, polyoxyethylene fatty acid bisphenyl ethers, polyalkylene benzyl phenyl ethers, polyoxyalkylene styryl phenyl ethers, acetylene diols, polyoxyalkylene-added acetylene diols, polyoxyethylene ether-type silicones, ester-type silicones, fluorosurfactants, polyoxyethylene castor oil, and polyoxyethylene hydrogenated castor oil; anionic surfactants such as alkyl sulfates, polyoxyethylene alkyl ether sulfates, polyoxyethylene alkyl phenyl ether sulfates, polyoxyethylene styryl phenyl ether sulfates, alkylbenzenesulfonates, alkyl aryl sulfonates, lignin sulfonates, alkylsulfosuccinates, naphthalenesulfonates, alkylnaphthalenesulfonates, salts of formalin condensates of naphthalenesulfonic acid, salts of formalin condensates of alkylnaphthalenesulfonic acid, fatty acid salts, polycarboxylates, polyacrylates, N-methyl-fatty acid sarcosinates, resinates, polyoxyethylene alkyl ether phosphates, and polyoxyethylene alkyl phenyl ether phosphates; cationic surfactants such as laurylamine hydrochloride, stearylamine hydrochloride, oleylamine hydrochloride, stearylamine acetate, stearylaminopropylamine acetate, and alkylamine salts including alkyltrimethylammonium chloride and alkyldimethylbenzalkonium chloride; and amphoteric surfactants such as amino acid- or betaine-type surfactants. These surfactants may be used alone or in combination of two or more. These wetting agents are preferably used in an amount of 0.05 to 2% by mass based on the entire oily suspension composition.

Furthermore, during grinding, a thickener such as a water-soluble polymer compound, for example, xanthan gum, guar gum, or carboxymethyl cellulose, bentonite, or white carbon can be added, as required.

The suspension produced using the above-described production method is mixed with an emulsifier, a thickener, and an oily dispersion medium. The suspension may be composed of not only a single suspension, but also a mixture of two or more suspensions. Examples of mixing methods include, although not limited to, a method in which the emulsifier, thickener, and oily dispersion medium are mixed into the suspension that is being mixed and stirred with a dissolver (disperser) or a homogenizer commonly used for the formulation step; a method in which the suspension is mixed into the emulsifier, thickener, and oily dispersion medium that are being mixed and stirred; and a method in which the suspension, emulsifier, thickener, and oily dispersion medium are mixed in random order.

The composition of the present invention produced using the above-described production method inevitably contains, as dispersion solvents, the oily dispersion medium and water used for producing the suspension. The structural mass ratio between water and the oily dispersion medium is 1:0.5 to 1:200, and preferably 1:1 to 1:50. The amount of the dispersion solvents used is preferably 50 to 65% by mass based on the entire composition of the present invention.

The active ingredient, in particular, an agrochemical active ingredient, that can be used in the present invention may be any active ingredient that can maintain a state in which it is suspended as solid particles, without particular limitation. The active ingredient, however, preferably has a water solubility of 2,000 ppm or less (20° C), and more preferably 500 ppm or less. The active ingredient also preferably has an oil solubility of 5,000 ppm or less (20°C), and more preferably 500 ppm or less. Furthermore, the active ingredient is preferably solid at room temperature (20°C). In the composition of the present invention, the active ingredient is preferably present in an amount of 0.1 to 40% by mass, and preferably 1 to 20% by mass, based on the entire composition.

Examples of agricultural/horticultural insecticides, acaricides, and nematicides as the active ingredient that can be used as an agrochemical in the composition of the present invention include crystal protein toxins produced by 3,5-xylyl methylcarbamate (XMC), *Bacillus thuringienses aizawai, Bacillus thuringienses israelensis, Bacillus thuringienses japonensis, Bacillus thuringienses kurstaki, Bacillus thuringienses tenebrionis,* and *Bacillus thuringienses,* BPMC, Bt toxin-derived insecticidal compounds, CPCBS (chlorfenson), DCIP (dichlorodiisopropyl ether), D-D (1,3-Dichloropropene), DDT, NAC, O-4-dimethylsulfamoylphenyl O, O-diethyl phosphorothioate (DSP), O-ethyl O-4-nitrophenyl phenylphosphonothioate (EPN), tripropylisocyanurate (TPIC), acrinathrin, azadirachtin, azinphos-methyl, acequinocyl, acetamiprid, acetoprole, acephate, abamectin, avermectin-B, amidoflumet, amitraz, alanycarb, aldicarb, aldoxycarb, aldrin, alpha-endosulfan, alpha-cypermethrin, albendazole, allethrin, isazofos, isamidofos, isoamidofos, isoxathion, isofenphos, isoprocarb (MIPC), ivermectin, imicyafos, imidacloprid, imiprothrin, indoxacarb, esfenvalerate, ethiofencarb, ethion, ethiprole, etoxazole, ethofenprox, ethoprophos, etrimfos, emamectin, emamectin-benzoate, endosulfan, empenthrin, oxamyl, oxydemeton-methyl, oxydeprofos (ESP), oxibendazole, oxfendazole, potassium oleate, sodium oleate, cadusafos, cartap, carbaryl, carbosulfan, carbofuryl, gamma-cyhalothrin, xylylcarb, quinalphos, kinoprene, chinomethionat, cloethocarb, clothianidin, clofentezine, chromafenozide, chlorantraniliprole, chlorethoxyfos, chlordimeform, chlordane, chlorpyrifos, chlorpyrifos-methyl, chlorphenapyr, chlorfenson, chlorfenvinphos, chlorfluazuron, chlorobenzilate, chlorobenzoate, kelthane (dicofol), salithion, cyanophos (CYAP), diafenthiuron, diamidafos, cyantraniliprole, theta-cypermethrin, dienochlor, cyenopyrafen, dioxabenzofos, diofenolan, sigma-cypermethrin, dichlofenthion (ECP), cycloprothrin, dichlorvos (DDVP), disulfoton, dinotefuryl, cyhalothrin, cyphenothrin, cyfluthrin, diflubenzuron, cyflumetofen, diflovidazin, cyhexatin, cypermethrin, dimethylvinphos, dimethoate, dimefluthrin, silafluofen, cyromazine, spinetoram, spinosad, spirodiclofen, spirotetramat, spiromesifen, sulfluramid, sulprofos, sulfoxaflor, zeta-cypermethrin, diazinon, tau-fluvalinate, dazomet, thiacloprid, thiamethoxam, thiodicarb, thiocyclam, thiosultap, thiosultap-sodium, thionazin, thiometon, deet, dieldrin, tetrachlorvinphos, tetradifon, tetramethylfluthrin, tetramethrin, tebupirimfos, tebufenozide, tebufenpyrad, tefluthrin, teflubenzuron, demeton-S-methyl, temephos, deltamethrin, terbufos, tralopyril, tralomethrin, transfluthrin, triazamate, triazuron, trichlamide, trichlorphon (DEP), triflumuron, tolfenpyrad, naled (BRP), nithiazine, nitenpyram, novaluron, noviflumuron,

hydroprene, vaniliprole, vamidothion, parathion, parathion-methyl, halfenprox, halofenozide, bistrifluron, bisultap, hydramethylnon, hydroxy propyl starch, binapacryl, bifenazate, bifenthrin, pymetrozine, pyraclorfos, pyrafluprole, pyridafenthion, pyridaben, pyridalyl, pyrifluquinazon, pyriprole, pyriproxyfen, pirimicarb, pyrimidifen, pirimiphos-methyl, pyrethrins, fipronil, fenazaquin, fenamiphos, bromopropylate, fenitrothion (MEP), fenoxycarb, fenothiocarb, phenothrin, fenobucarb, fensulfothion, fenthion (MPP), phenthoate (PAP), fenvalerate, fenpyroximate, fenpropathrin, fenbendazole, fosthiazate, formetanate, butathiofos, buprofezin, furathiocarb, prallethrin, fluacrypyrim, fluazinam, fluazuron, fluensulfone, flucycloxuron, flucythrinate, fluvalinate, flupyrazofos, flufenerim, flufenoxuron, flufenzine, flufenoprox, fluproxyfen, flubrocythrinate, flubendiamide, flumethrin, flurimfen, prothiofos, protrifenbute, flonicamid, propaphos, propargite (BPPS), profenofos, profluthrin, propoxur (PHC), bromopropylate, beta-cyfluthrin, hexaflumuron, hexythiazox, heptenophos, permethrin, benclothiaz, bendiocarb, bensultap, benzoximate, benfuracarb, phoxim, phosalone, fosthiazate, fosthietan, phosphamidon, phosphocarb, phosmet (PMP), polynactins, formetanate, formothion, phorate,

machine oil, malathion, milbemycin, milbemycin-A, milbemectin, mecarbam, mesulfenfos, methomyl, metaldehyde, metaflumizone, methamidophos, metam-ammonium, metam-sodium, methiocarb, methidathion (DMTP), methylisothiocyanate, methylneodecanamide, methylparathion, metoxadiazone, methoxychlor, methoxyfenozide, metofluthrin, methoprene, metolcarb, meperfluthrin, mevinphos, monocrotophos, monosultap, lambda-cyhalothrin, ryanodine, lufenuron, resmethrin, lepimectin, rotenone, levamisol hydrochloride, fenbutatin oxide, morantel tartarate, methyl bromide, cyhexatin, calcium cyanamide, calcium polysulfide, sulfur, and nicotine-sulfate.

Examples of agricultural/horticultural microbiocides used for the same purpose include aureofungin, azaconazole, azithiram, acypetacs, acibenzolar, acibenzolar-S-methyl, azoxystrobin, anilazine, amisulbrom, ampropylfos, ametoctradin, allyl alcohol, aldimorph, amobam, isotianil, isovaledione, isopyrazam, isoprothiolane, ipconazole, iprodione, iprovalicarb, iprobenfos, imazalil, iminoctadine, iminoctadine-albesilate, iminoctadine-triacetate, imibenconazole, uniconazole, uniconazole-P, echlomezole, edifenphos, etaconazole, ethaboxam, ethirimol, etem, ethoxyquin, etridiazole, enestroburin, epoxiconazole, oxadixyl, oxycarboxin, copper-8-quinolinolate, oxytetracycline, copper-oxinate, oxpoconazole, oxpoconazole-fumarate, oxolinic acid, octhilinone, ofurace, orysastrobin,

metam-sodium, kasugamycin, carbamorph, carpropamid, carbendazim, carboxin, carvone, quinazamid, quinacetol, quinoxyfen, quinomethionate, captafol, captan, kiralaxyl, quinconazole, quintozene, guazatine, cufraneb, cuprobam, glyodin, griseofulvin, climbazole, cresol, kresoxim-methyl, chlozolinate, clotrimazole, chlobenthiazone, chloraniformethan, chloranil, chlorquinox, chloropicrin, chlorfenazole, chlorodinitronaphthalene, chlorothalonil, chloroneb, zarilamid, salicylanilide, cyazofamid, diethyl pyrocarbonate, diethofencarb, cyclafuramid, diclocymet, dichlozoline, diclobutrazol, dichlofluanid, cycloheximide, diclomezine, dicloran, dichlorophen, dichlone, disulfiram, ditalimfos, dithianon, diniconazole, diniconazole-M, zineb, dinocap, dinocton, dinosulfon, dinoterbon, dinobuton, dinopenton, dipyrithione, diphenylamine, difenoconazole, cyflufenamid, diflumetorim, cyproconazole, cyprodinil, cyprofuram, cypendazole, simeconazole, dimethirimol, dimethomorph, cymoxanil, dimoxystrobin, methyl bromide, ziram, silthiofam, streptomycin, spiroxamine, sultropen, sedaxane, zoxamide,

dazomet, thiadiazin, tiadinil, thiadifluor, thiabendazole, tioxymid, thiochlorfenphim, thiophanate, thiophanate-methyl, thicyofen, thioquinox, chinomethionat, thifluzamide, thiram, decafentin, tecnazene, tecloftalam, tecoram, tetraconazole, debacarb, dehydroacetic acid, tebuconazole, tebufloquin, dodicin, dodine, dodecyl benzensulfonate bis-ethylene diamine copper salt (II) (DBEDC), dodemorph, drazoxolon, triadimenol, triadimefon, triazbutil, triazoxide, triamiphos, triarimol, trichlamide, tricyclazole, triticonazole, tridemorph, tributyltin oxide, triflumizole, trifloxystrobin, triforine, tolylfluanid, tolclofos-methyl, natamycin, nabam, nitrothal-isopropyl, nitrostyrene, nuarimol, copper nonylphenol sulfonate, halacrinate, validamycin, valifenalate, harpin protein, bixafen, picoxystrobin, picobenzamide, bithionol, bitertanol, hydroxyisoxazole, hydroisoxazole-potassium, binapacryl, biphenyl, piperalin, hymexazol, pyraoxystrobin, pyracarbolid, pyraclostrobin, pyrazophos, pyrametostrobin, pyriofenone, pyridinitril, pyrifenox, pyribencarb, pyrimethanil, pyroxychlor, pyroxyfur, pyroquilon, vinclozolin, famoxadone, fenapanil, fenamidone, fenaminosulf, fenarimol, fenitropan, fenoxanil, ferimzone, ferbam, fentin, fenpiclonil, fenpyrazamine, fenbuconazole, fenfuram, fenpropidin, fenpropimorph, fenhexamid, phthalide, buthiobate, butylamine, bupirimate, fuberidazole, blasticidin-S, furametpyr, furalaxyl, fluacrypyrim, fluazinam, fluoxastrobin, fluotrimazole, fluopicolide, fluopyram, fluoroimide, furcarbanil, fluxapyroxad, fluquinconazole, furconazole, furconazole-cis, fludioxonil, flusilazole, flusulfamide, flutianil, flutolanil, flutriafol, furfural, furmecyclox, flumetover, flumorph, proquinazid, prochloraz, procymidone, prothiocarb, prothioconazole, propamocarb, propiconazole, propineb, furophanate, probenazole, bromuconazole, hexachlorobutadiene, hexaconazole, hexylthiofos, bethoxazin, benalaxyl, benalaxyl-M, benodanil, benomyl, pefurazoate, benquinox, penconazole, benzamorf, pencycuron, benzohydroxamic acid, bentaluron, benthiazole, benthiavalicarb-isopropyl, penthiopyrad, penflufen, boscalid, phosdiphen, fosetyl, fosetyl-Al, polyoxins, polyoxorim, polycarbamate, folpet, formaldehyde,

machine oil, maneb, mancozeb, mandipropamid, myclozolin, myclobutanil, mildiomycin, milneb, mecarbinzid, methasulfocarb, metazoxolon, metam, metam-sodium, metalaxyl, metalaxyl-M, metiram, methyl isothiocyanate, mepthyldinocap, metconazole, metsulfovax, methfuroxam, metominostrobin, metrafenone, mepanipyrim, mefenoxam, meptyldinocap, mepronil, mebenil, iodomethane, rabenzazole, benzalkonium chloride, inorganic microbicides such as basic copper chloride, basic copper sulfate, and silver, sodium hypochlorote, cupric hydroxide, wettable sulfur, calcium polysulfide, potassium hydrogen carbonate, sodium hydrogen carbonate, sulfur, copper sulfate anhydride, nickel dimethyldithiocarbamate, copper-based compounds such as oxine copper, zinc sulfate, and copper sulfate pentahydrate.

Likewise, examples of herbicides include 1-naphthylacetamide, 2,4-PA, 2,3,6-TBA, 2,4,5-T, 2,4,5-TB, 2,4-D, 2,4-DB, 2,4-DEB, 2,4-DEP, 3,4-DA, 3,4-DB, 3,4-DP, 4-CPA, 4-CPB, 4-CPP, MCP, MCPA, MCPA-thioethyl, MCPB, ioxynil, aclonifen, azafenidin, acifluorfen, aziprotryne, azimsulfuron, asulam, acetochlor, atrazine, atraton, anisuron, anilofos, aviglycine, abscisic acid, amicarbazone, amidosulfuron, amitrole, aminocyclopyrachlor, aminopyralid, amibuzin, amiprophos-methyl, ametridione, ametryn, alachlor, allidochlor, alloxydim, alorac, isouron, isocarbamid, isoxachlortole, isoxapyrifop, isoxaflutole, isoxaben, isocil, isonoruron, isoproturon, isopropalin, isopolinate, isomethiozin, inabenfide, ipazine, ipfencarbazone, iprymidam, imazaquin, imazapic, imazapyr, imazamethapyr, imazamethabenz, imazamethabenz-methyl, imazamox, imazethapyr, imazosulfuron, indaziflam, indanofan, indolebutyric acid, uniconazole-P, eglinazine, esprocarb, ethametsulfuron, ethametsulfuron-methyl, ethalfluralin, ethiolate, ethychlozate ethyl, ethidimuron, etinofen, ethephon, ethoxysulfuron, ethoxyfen, etnipromid, ethofumesate, etobenzanid, epronaz, erbon, endothal, oxadiazon, oxadiargyl, oxaziclomefone, oxasulfuron, oxapyrazon, oxyfluorfen, oryzalin, orthosulfamuron, orbencarb, cafenstrole, cambendichlor, carbasulam, carfentrazone, carfentrazone-ethyl, karbutilate, carbetamide, carboxazole, quizalofop, quizalofop-P, quizalofop-ethyl, xylachlor, quinoclamine, quinonamid, quinclorac, quinmerac, cumyluron, cliodinate, glyphosate, glufosinate, glufosinate-P, credazine, clethodim, cloxyfonac, clodinafop, clodinafop-propargyl, chlorotoluron, clopyralid, cloproxydim, cloprop, chlorbromuron, clofop, clomazone, chlomethoxynil, chlomethoxyfen, clomeprop, chlorazifop, chlorazine, cloransulam, chloranocryl, chloramben, cloransulam-methyl, chloridazon, chlorimuron, chlorimuron-ethyl, chlorsulfuron, chlorthal, chlorthiamid, chlortoluron, chlornitrofen, chlorfenac, chlorfenprop, chlorbufam, chlorflurazole, chlorflurenol, chlorprocarb, chlorpropham, chlormequat, chloreturon, chloroxynil, chloroxuron, chloropon, saflufenacil, cyanazine, cyanatryn, di-allate, diuron, diethamquat, dicamba, cycluron, cycloate, cycloxydim, diclosulam, cyclosulfamuron, dichlorprop, dichlorprop-P, dichlobenil, diclofop, diclofop-methyl, dichlormate, dichloralurea, diquat, cisanilide, disul, siduron, dithiopyr, dinitramine, cinidon-ethyl, dinosam, cinosulfuron, dinoseb, dinoterb, dinofenate, dinoprop, cyhalofop-butyl, diphenamid, difenoxuron, difenopenten, difenzoquat, cybutryne, cyprazine, cyprazole, diflufenican, diflufenzopyr, dipropetryn, cypromid, cyperquat, gibberellin, simazine, dimexano, dimethachlor, dimidazon, dimethametryn, dimethenamid, simetryn, simeton, dimepiperate, dimefuron, cinmethylin, swep, sulglycapin, sulcotrione, sulfallate, sulfentrazone, sulfosulfuron, sulfometuron, sulfometuron-methyl, secbumeton, sethoxydim, sebuthylazine, terbacil, daimuron, dazomet, dalapon, thiazafluron, thiazopyr, thiencarbazone, thiencarbazone-methyl, tiocarbazil, tioclorim, thiobencarb, thidiazimin, thidiazuron, thifensulfuron, thifensulfuron-methyl, desmedipham, desmetryn, tetrafluron, thenylchlor, tebutam, tebuthiuron, terbumeton, tepraloxydim, tefuryltrione, tembotrione, delachlor, terbacil, terbucarb, terbuchlor, terbuthylazine, terbutryn, topramezone, tralkoxydim, triaziflam, triasulfuron, tri-allate, trietazine, tricamba, triclopyr, tridiphane, tritac, tritosulfuron, triflusulfuron, triflusulfuron-methyl, trifluralin, trifloxysulfuron, tripropindan, tribenuron-methyl, tribenuron, trifop, trifopsime, trimeturon, naptalam,

naproanilide, napropamide, nicosulfuron, nitralin, nitrofen, nitrofluorfen, nipyraclofen, neburon, norflurazon, noruron, barban, paclobutrazol, paraquat, parafluron, haloxydine, haloxyfop, haloxyfop-P, haloxyfop-methyl, halosafen, halosulfuron, halosulfuron-methyl, picloram, picolinafen, bicyclopyrone, bispyribac, bispyribac-sodium, pydanon, pinoxaden, bifenox, piperophos, hymexazol, pyraclonil, pyrasulfotole, pyrazoxyfen, pyrazosulfuron, pyrazosulfuron-ethyl, pyrazolate, bilanafos, pyraflufen-ethyl, pyriclor, pyridafol, pyrithiobac, pyrithiobac-sodium, pyridate, pyriftalid, pyributicarb, pyribenzoxim, pyrimisulfan, primisulfuron, pyriminobac-methyl, pyroxasulfone, pyroxsulam,

fenasulam, phenisopham, fenuron, fenoxasulfone, fenoxaprop, fenoxaprop-P, fenoxaprop-ethyl, phenothiol, fenoprop, phenobenzuron, fenthiaprop, fenteracol, fentrazamide, phenmedipham, phenmedipham-ethyl, butachlor, butafenacil, butamifos, buthiuron, buthidazole, butylate, buturon, butenachlor, butroxydim, butralin, flazasulfuron, flamprop, furyloxyfen, prynachlor, primisulfuron-methyl, fluazifop, fluazifop-P, fluazifop-butyl, fluazolate, fluroxypyr, fluothiuron, fluometuron, fluoroglycofen, flurochloridone, fluorodifen, fluoronitrofen, fluoromidine, flucarbazone, flucarbazone-sodium, fluchloralin, flucetosulfuron, fluthiacet, fluthiacet-methyl, flupyrsulfuron, flufenacet, flufenican, flufenpyr, flupropacil, flupropanate, flupoxam, flumioxazin, flumiclorac, flumiclorac-pentyl, flumipropyn, flumezin, fluometuron, flumetsulam, fluridone, flurtamone, fluroxypyr, pretilachlor, proxan, proglinazine, procyazine, prodiamine, prosulfalin, prosulfuron, prosulfocarb, propaquizafop, propachlor, propazine, propanil, propyzamide, propisochlor, prohydrojasmon, propyrisulfuron, propham, profluazol, profluralin, prohexadione-calcium, propoxycarbazone, propoxycarbazone-sodium, profoxydim, bromacil, brompyrazon, prometryn, prometon, bromoxynil, bromofenoxim, bromobutide, bromobonil, florasulam, hexachloroacetone, hexazinone, pethoxamid, benazolin, penoxsulam, pebulate, beflubutamid, vernolate, perfluidone, bencarbazone, benzadox, benzipram, benzylaminopurine, benzthiazuron, benzfendizone, bensulide, bensulfuron-methyl, benzoylprop, benzobicyclon, benzofenap, benzofluor, bentazone, pentanochlor, benthiocarb, pendimethalin, pentoxazone, benfluralin, benfuresate,

fosamine, fomesafen, foramsulfuron, forchlorfenuron, maleic hydrazide, mecoprop, mecoprop-P, medinoterb, mesosulfuron, mesosulfuron-methyl, mesotrione, mesoprazine, methoprotryne, metazachlor, methazole, metazosulfuron, methabenzthiazuron, metamitron, metamifop, metam, methalpropalin, methiuron, methiozolin, methiobencarb, methyldymron, metoxuron, metosulam, metsulfuron, metsulfuron-methyl, metflurazon, metobromuron, metobenzuron, methometon, metolachlor, metribuzin, mepiquat-chloride, mefenacet, mefluidide, monalide, monisouron, monuron, monochloroacetic acid, monolinuron, molinate, morfamquat, iodosulfuron, iodosulfuron-methyl-sodium, iodobonil, iodomethane, lactofen, linuron, rimsulfuron, lenacil, rhodethanil, calcium peroxide, and methyl bromide.

Furthermore, examples of biopesticides include viral formulations such as nuclear polyhedrosis virus (NPV), granulosis virus (GV), cytoplasmic polyhedrosis virus (CPV), and entomopoxi virus (EPV); microbial pesticides used as insecticides or nematicides, such as *Monacrosporium phymatophagum, Steinernema carpocapsae, Steinernema kushidai,* and *Pasteuria penetrans;* microbial pesticides used as microbicides, such as *Trichoderma lignorum, Agrobacterium radiobactor,* avirulent *Erwinia carotovora,* and *Bacillus subtilis*; and biopesticides used as herbicides, such as *Xanthomonas campestris.* The use of the composition of the present invention in admixture with these biopesticides can be expected to produce the same effect.

Other examples of biopesticides include natural predators such as *Encarsia formosa, Aphidius colemani, Aphidoletes aphidimyza, Diglyphus isaea, Dacnusa sibirica, Phytoseiulus persimilis, Amblyseius cucumeris,* and *Orius sauteri*; microbial pesticides such as *Beauveria brongniartii*; and pheromones such as (Z)-10-tetradecenyl acetate, (E,Z)-4,10-tetradecadienyl acetate, (Z)-8-dodecenyl acetate, (Z)-11-tetradecenyl acetate, (Z)-13-icosen-10-one, and 14-methyl-1-octadecene. The composition of the present invention can also be used in combination with these biopesticides.

The composition of the present invention can contain other additives commonly used in formulations, as required. Examples of such additives include carriers such as solid or liquid carriers, dispersants, binders, tackifiers, colorants, spreaders, sticking/spreading agents, anti-freezing agents, anti-caking agents, disintegrants, stabilizing agents, and anti-foaming agents. Additionally, preservatives, plant fragments, and the like may be used as additives, as required. These additives may be used alone or in combination of two or more.

Examples of solid carriers include natural minerals such as quartz, clay, kaolinite, pyrophyllite, sericite, talc, bentonite, acid clay, attapulgite, zeolite, and diatomite; inorganic salts such as calcium carbonate, ammonium sulfate, sodium sulfate, and potassium chloride; organic solid carriers such as synthetic silicic acid, synthetic silicates, starch, cellulose, and plant powders (e.g., sawdust, coconut shell, corncob, and tobacco stalk); plastic carriers such as polyethylene, polypropylene, and polyvinylidene chloride; urea; hollow inorganic materials; hollow plastic materials; and fumed silica (white carbon). These solid carriers may be used alone or in combination of two or more.

Examples of liquid carriers include alcohols including monohydric alcohols such as ethanol, propanol, isopropanol, and butanol, as well as polyhydric alcohols such as ethylene glycol, diethylene glycol, propylene glycol, hexylene glycol, polyethylene glycol, polypropylene glycol, and glycerol; polyol compounds such as propylene glycol ether; ketones such as acetone, methyl ethyl ketone, methyl isobutyl ketone, diisobutyl ketone, and cyclohexanone; ethers such as ethyl ether, dioxane, ethylene glycol monoethyl ether, dipropyl ether, and tetrahydrofuran; aliphatic hydrocarbons such as normal paraffin, naphthene, isoparaffin, kerosene, and mineral oils; aromatic hydrocarbons such as benzene, toluene, xylene, solvent naphtha, and alkyl naphthalene; halogenated hydrocarbons such as dichloromethane, chloroform, and carbon tetrachloride; esters such as ethyl acetate, diisopropyl phthalate, dibutyl phthalate, dioctyl phthalate, dimethyl adipate, methyl oleate, and methylated vegetable oils; lactones such as $\gamma$-butyrolactone; amides such as dimethylformamide, diethylformamide, dimethylacetamide, and N-alkyl pyrrolidinone; nitriles such as acetonitrile; sulfur compounds such as dimethyl sulfoxide; vegetable oils such as soybean oil, rapeseed oil, cotton seed oil, and castor oil; and water. These liquid carriers may be used alone or in combination of two or more.

Examples of dispersants include water-soluble polymers such as gelatin, gum arabic, casein, dextrin, pectin, sodium alginate, methyl cellulose, ethyl cellulose, carboxymethylcellulose sodium, hydroxyethyl cellulose, hydroxypropyl cellulose, sodium polyacrylate, polyvinyl alcohol, polyvinyl pyrrolidone, and carboxyvinyl polymers; anionic surfactants such as fatty acid soaps, ether carboxylic acids, ether carboxylates, salts of condensates of higher fatty acids and amino acids, higher alkyl sulfonates, $\alpha$-olefin sulfonates, higher fatty acid ester sulfonates, dialkyl sulfosuccinates, higher fatty acid amide sulfonates, alkyl aryl sulfonates, higher alcohol sulfates, alkyl ether sulfates, alkyl aryl ether sulfates, higher fatty acid ester sulfates, higher fatty acid alkylolamide sulfates, sulfated oil, and phosphates; cationic surfactants such as alkylamine salts, amine salts of polyamines or amino alcohol fatty acid derivatives, alkyl quarternary ammonium salts, cyclic quarternary ammonium salts, quarternary ammonium salts having hydroxyl groups, and quarternary ammonium salts having ether bonds; amphoteric surfactants such as carboxylic acid-type, sulfate-type, sulfonic acid-type, and phosphate-type amphoteric surfactants; and nonionic surfactants such as polyoxyethylene alkyl ethers, polyoxyethylene alkyl aryl ethers, formalin condensates of polyoxyethylene alkyl phenols, polyoxyethylene fatty acid esters, polyoxyethylenated fats and oils, polyol esters, and polyoxyethylene-polyoxypropylene block copolymers. One of these dispersants may be used alone, or two or more of them may be used in combination, although the dispersant is not limited thereto.

Examples of binders and tackifiers include carboxymethyl cellulose or salts thereof, dextrin, water-soluble starch, modified starch, xanthan gum, guar gum, sucrose, polyvinyl pyrrolidone, gum arabic, polyvinyl alcohol, polyvinyl acetate, sodium polyacrylate, polyethylene glycol with an average molecular weight of 6,000 to 20,000, polyethylene oxide with an average molecular weight of 100,000 to 5,000,000, phospholipids (e.g., cephalin and lecithin), cellulose powder, polyaminocarboxylic acid chelate compounds, cross-linked polyvinyl pyrrolidone, copolymers of maleic acid with styrene, (meth)acrylic acid copolymers, half esters of polymers of polyols and dicarboxylic anhydride, water-soluble salts of polystyrene sulfonic acid, paraffin, terpene, polyamide resins, polyacrylates, polyoxyethylene, waxes, polyvinyl alkyl ethers, alkyl phenol-formalin condensates, and synthetic resin emulsions.

Examples of colorants include inorganic pigments such as iron oxide, titanium oxide, and prussian blue; organic dyes such as alizarin dyes, azo dyes, and metal phthalocyanine dyes; and organic pigments such as Phthalocyanine Blue and Permanent Red.

Examples of anti-freezing agents include polyols such as ethylene glycol, diethylene glycol, propylene glycol, and glycerol.

Examples of adjuvants for preventing caking or facilitating disintegration include polysaccharides such as starch, alginic acid, mannose, and galactose, polyvinyl pyrrolidone, fumed silica (white carbon), ester gum, petroleum resin, sodium tripolyphosphate, sodium hexametaphosphate, metal stearates, cellulose powder, dextrin, methacrylate copolymers, polyvinyl pyrrolidone, polyaminocarboxylic acid chelate compounds, sulfonated styrene-isobutylene-maleic anhydride copolymers, and starch-polyacrylonitrile graft copolymers.

Examples of stabilizing agents include desiccants such as zeolite, quicklime, and magnesium oxide; antioxidants such as phenolic compounds, amine compounds, sulfur compounds, and phosphoric acid compounds; and ultraviolet absorbers such as salicylic acid compounds and benzophenone compounds.

Examples of anti-foaming agents include silicone oils.

Examples of preservatives include potassium sorbate and 1,2-benzothiazolin-3-one.

Furthermore, other adjuvants including functional sticking/spreading agents, activity enhancers such as piperonyl butoxide and other metabolic inhibitors, anti-freezing agents such as propylene glycol, antioxidants such as BHT, and ultraviolet absorbers can also be used, as required.

The composition of the present invention can be diluted to a predetermined concentration and then used by being applied to agricultural/horticultural crops, or applied to soil, for example. For use in a paddy field, for example, the composition of the present invention may be used without dilution with water, by being directly introduced into the water in the paddy field.

Furthermore, the present invention is applicable to industrial production as a method for safely and efficiently pulverizing an oily suspension composition for use as a pharmaceutical drug, cosmetic composition, a food composition, or the like, which contains a crystalline compound that is poorly soluble in water and oils.

Examples

The present invention will be hereinafter described in more detail with reference to examples and test examples; however, the present invention is not limited solely to the following examples. The term "part" or "parts" hereinafter denotes part(s) by mass.

Referential Example 1. Method for producing a suspension of a pulverized agrochemical active ingredient (production of a premix (A))

40 parts of pyraflufen-ethyl as a drug substance (active ingredient), 3 parts of polyoxyethylene tristyrylphenyl ether phosphate diethanolamine salt (trade name "SORPOL 7425" from Toho Chemical Industry Co., Ltd.), 1 part of a dialkyl sulfosuccinate (trade name "NEOCOL YSK" from DKS Co., Ltd.), 0.18 part of polydimethylsiloxane (trade name "SILCOLAPSE 454" from Solvay Nicca, Ltd.), 0.1 part of 1,2-benzisothiazolin-3-one (trade name "PROXEL GXL(S)" from Arch Chemical, Inc.), 3 parts of ethylene glycol, and 52.72 parts of water were mixed in a dissolver, and then the mixture was subjected to wet grinding in DYNO-MILL to adjust the particle diameter of the active ingredient to 0.5 $\mu$m, thus giving a premix (A).

Wet grinding conditions:

beads: zirconia $\phi$ 0.3 mm (particle diameter), filling ratio: 85%

Referential Example 2. Method for producing a suspension of a pulverized agrochemical active ingredient (production of a premix (B))

40 parts of diflufenican as a drug substance (active ingredient), 3 parts of a formalin condensate of sodium alkylnaphthalenesulfonate (trade name "Morwet D-425" from Lion Akzo Co., Ltd.), 1 part of a dialkyl sulfosuccinate (trade name "NEOCOL YSK" from DKS Co., Ltd.), 0.1 part of polydimethylsiloxane (trade name "SILCOLAPSE 454" from Solvay Nicca, Ltd.), 0.1 part of 1,2-benzisothiazolin-3-one (trade name "PROXEL GXL(S)" from Arch Chemical, Inc.), and 55.8 parts of water were mixed in a dissolver, and then the mixture was subjected to wet grinding in DYNO-MILL under the same conditions as in Referential Example 1 to adjust the particle diameter of the active ingredient to 0.3 μm, thus giving a premix (B).

Example 1. Production of an oily suspension agrochemical composition

1.56 parts of the premix (A) produced in the referential example, 35 parts of a mixture of a polyoxyethylene sorbitol fatty acid ester and dioctyl sulfosuccinate calcium salt (trade name "SORPOL 4315" from Toho Chemical Industry Co., Ltd.), 1.5 parts of organic bentonite (trade name "S-BEN NX80" from Hojun, Co., Ltd.), and 61.94 parts of methyl oleate were mixed in a dissolver, thus giving an oily suspension agrochemical composition of Example 1 (hereinafter denoted as the "OD").

Example 2.

1.56 parts of the premix (A) produced in Referential Example 1, 18.75 parts of the premix (B) produced in Referential Example 2, 32 parts of a mixture of a polyoxyethylene sorbitol fatty acid ester and dioctyl sulfosuccinate calcium salt (trade name "SORPOL 4315" from Toho Chemical Industry Co., Ltd.), 1.5 parts of organic bentonite (trade name "S-BEN NX80" from Hojun, Co., Ltd.), and 46.19 parts of methyl oleate were mixed in a dissolver, thus giving an oily suspension agrochemical composition of Example 2 (hereinafter denoted as the "OD").

Example 3.

1.56 parts of the premix (A), 18.75 parts of the premix (B), 7 parts of polyoxyethylene castor oil (trade name "TANEMUL KS" from Tanatex Chemicals Japan K.K.), 8 parts of a dodecylbenzenesulfonate (trade name "TANEMUL 1371A" from Tanatex Chemicals Japan K.K.), 5 parts of an alcohol ethoxylate (trade name "TANEMUL 1736"), 1.5 parts of organic bentonite (trade name "S-BEN NX80" from Hojun, Co., Ltd.), and 58.19 parts of methyl oleate were mixed in a dissolver, thus giving an OD of Example 3.

Comparative Example 1.

10.11 parts of pyraflufen-ethyl (amount of the active ingredient), 8.75 parts of polyoxyethylene castor oil (trade name "SORPOL CA-30 from Toho Chemical Industry Co., Ltd.), 1.75 parts of a dodecylbenzenesulfonate (trade name "RHODACAL 70/B" from Solvay Nicca, Ltd.), 0.07 part of polydimethylsiloxane (trade name "SILCOLAPSE 454" from Solvay Nicca, Ltd.), and 79.32 parts of methyl oleate were mixed in a dissolver, and then the mixture was subjected to wet grinding in DYNO-MILL under the same conditions as in Referential Example 1, thus giving a premix (C).

10 parts of the premix (C), 7 parts of polyoxyethylene lauryl ether (trade name "NOIGEN ET-102" from DKS Co., Ltd), 15 parts of a mixture of an anionic surfactant and a cationic surfactant [components not disclosed] (trade name "Geronol VO600J" from Solvay Nicca, Ltd.), 1 part of hydrophobic silica (trade name "AEROSIL R202" from Evonik Degussa Corporation), and 67 parts of methyl oleate were mixed in a dissolver, thus giving an OD of Comparative Example 1.

Comparative Example 2.

2.19 parts of pyraflufen-ethyl (amount of the active ingredient), 26.25 parts of diflufenican (active ingredient), 8.75 parts of polyoxyethylene castor oil (trade name "SORPOL CA-30 from Toho Chemical Industry Co., Ltd.), 1.75 parts of a dodecylbenzenesulfonate (trade name "RHODACAL 70/B" from Solvay Nicca, Ltd.), 0.07 part of polydimethylsiloxane (trade name "SILCOLAPSE 454" from Solvay Nicca, Ltd.), and 60.99 parts of methyl oleate were mixed in a dissolver, and then the mixture was subjected to wet grinding in DYNO-MILL under the same conditions as in Referential Example 1, thus giving a premix (D).

57.14 parts of the premix (D), 7 parts of polyoxyethylene lauryl ether (trade name "NOIGEN ET-102" from DKS Co., Ltd), 15 parts of a mixture of an anionic surfactant and a cationic surfactant [components not disclosed] (trade name "Geronol VO600J" from Solvay Nicca, Ltd.), 1 part of hydrophobic silica (trade name "AEROSIL R202" from Evonik Degussa Corporation), and 19.86 parts of methyl oleate were mixed in a dissolver, thus giving an OD of Comparative Example 2.

Comparative Example 3

5 parts of the premix (A) obtained in Referential Example 1, 4 parts of a formalin condensate of sodium alkylnaphthalenesulfonate (trade name "Morwet D-425" from Lion Akzo Co., Ltd.), 0.5 part of a dialkyl sulfosuccinate (trade name "NEOCOL YSK" from DKS Co., Ltd.), 0.20 part of a heteropolysaccharide (trade name "RHODOPOL 23" from Solvay Nicca, Ltd.), 0.05 part of polydimethylsiloxane (trade name "KM-73" from Shin-Etsu Chemical Co., Ltd.), 0.01 part of 1,2-benzisothiazolin-3-one (trade name "PROXEL GXL(S)" from Arch Chemical, Inc.), 5 parts of propylene glycol, and 85.24 parts of water were mixed in a dissolver, thus giving an SC of Comparative Example 3.

Example 4.

50 parts of flubendiamide as a drug substance (active ingredient), 2.86 parts of a formalin condensate of sodium alkylnaphthalenesulfonate (trade name "Morwet D-425" from Lion Akzo Co., Ltd.), 1.19 parts of a dialkyl sulfosuccinate (trade name "NEOCOL YSK" from DKS Co., Ltd.), 0.2 part of polydimethylsiloxane (trade name "KM-73" from Shin-Etsu Chemical Co., Ltd.), 0.1 part of 1,2-benzisothiazolin-3-one (trade name "PROXEL GXL(S)" from Arch Chemical, Inc.), 4.5 parts of propylene glycol, and 41.15 parts of water were mixed in a dissolver, and then the mixture was subjected to wet grinding in DYNO-MILL under the same conditions as in Referential Example 1 to adjust the particle diameter of the active ingredient to 0.9 $\mu$m, thus giving a premix (E).

20 parts of the premix (E), 12 parts of a mixture of a polyoxyethylene sorbitol fatty acid ester and dioctyl sulfosuccinate calcium salt (trade name "SORPOL 4315" from Toho Chemical Industry Co., Ltd.), 2 parts of organic bentonite (trade name "S-BEN NX80" from Hojun, Co., Ltd.), and 66 parts of methyl oleate were mixed in a dissolver, thus giving an OD of Example 4.

Comparative Example 4.

20 parts of flubendiamide (amount of the active ingredient), 20 parts of a mixture of a polyoxyethylene sorbitol fatty acid ester and dioctyl sulfosuccinate calcium salt (trade name "SORPOL 4315" from Toho Chemical Industry Co., Ltd.), 0.1 part of polydimethylsiloxane (trade name "SILCOLAPSE 454" from Solvay Nicca, Ltd.), and 59.9 parts of methyl oleate were mixed in a dissolver, and then the mixture was subjected to wet grinding in DYNO-MILL under the same conditions as in Referential Example 1, thus giving a premix (F).

57.14 parts of the premix (F), 7 parts of a mixture of a polyoxyethylene sorbitol fatty acid ester and dioctyl sulfosuccinate calcium salt (trade name "SORPOL 4315" from Toho Chemical Industry Co., Ltd.), 1 part of hydrophobic silica (trade name "AEROSIL R202" from Evonik Degussa Corporation), and 34.86 parts of methyl oleate were mixed in a dissolver, thus giving an OD of Comparative Example 4.

Comparative Example 5.

20 parts of the premix (E) obtained in Example 4, 1 part of a formalin condensate of sodium alkylnaphthalenesulfonate (trade name "Morwet D-425" from Lion Akzo Co., Ltd.), 0.5 part of a dialkyl sulfosuccinate (trade name "NEOCOL YSK" from DKS Co., Ltd.), 0.05 part of polydimethylsiloxane (trade name "KM-73" from Shin-Etsu Chemical Co., Ltd.), 0.15 part of a heteropolysaccharide (trade name "RHODOPOL 23" from Solvay Nicca, Ltd.), 0.01 part of 1,2-benzisothiazolin-3-one (trade name "PROXEL GXL(S)" from Arch Chemical, Inc.), 5 parts of propylene glycol, and 73.29 parts of water were mixed in a dissolver, thus giving an SC of Comparative Example 5.

Test Example 1 (Evaluation of Appearance)

The appearance of each of the ODs of Examples 1 to 4 and Comparative Examples 1, 2 and 4 after storage at 54°C for 2 weeks was visually evaluated. The results are shown in Tables 1 and 2. Where the precipitation of crystals is observed, sedimentation and solidification may occur.

Test Example 2 (Separation)

The appearance of each of the ODs of Examples 1 to 4 and Comparative Examples 1, 2 and 4 after storage at 54°C for 2 weeks was visually evaluated. The results are shown in Tables 1 and 2 (the proportion of an upper layer is expressed in percentage). Where 20% or more separation is observed, sedimentation and solidification may occur after long-term storage.

Test Example 3 (Dispersibility)

250 mL of hard water D was placed in a 250-mL cylinder, and 1 g of each of the ODs of Examples 1 to 4 and Comparative Examples 1, 2 and 4 was added dropwise thereto. After 1 minute, the cylinder was inverted, and the number of inversions was counted until the OD was completely dispersed. The results are shown in Tables 1 and 2. Where the dispersibility (number of inversions) is 20 or more, uniform dilution may not be achieved in actual use, possibly leading to an insufficient effect or phytotoxicity.

Table 1

|  | Example 1 | Example 2 | Example 3 | Comparative Example 1 | Comparative Example 2 |
|---|---|---|---|---|---|
| Appearance | No Problem | No Problem | No Problem | No Problem | Crystal Precipitation with Sedimentation |
| Separation | 15% | 0% | 0% | 65% | 60% |
| Dispersibility | 5 | 5 | 5 | 20 | 20 |

Table 2

|  | Example 4 | Comparative Example 4 |
|---|---|---|
| Appearance | No Problem | No Problem |
| Separation | 0% | 30% |
| Dispersibility | 10 | 10 |

As is clear from the results shown in Tables 1 and 2, the ODs of the examples according to the present invention are shown to be superior to those of Comparative Examples 1, 2 and 4 in terms of the stability (appearance and separation) and dispersibility of the formulations.

Test Example 4 (Grindability)

Each of the premix compositions, i.e., the premix (A) in Referential Example 1, the premix (B) in Referential Example 2, the premix (D) in Comparative Example 1, and the premix (E) in Comparative Example 2, was subjected to wet grinding under the conditions shown below, and compared in terms of the time required for grinding and particle diameter. The results are shown in Tables 3, 4 and 5.

Table 3

|  | Grinding Time (Min) | Referential Example 1 Premix (A) | Comparative Example 1 Premix (C) |
|---|---|---|---|
|  |  | Pyraflufen-Ethyl | |
| Change in Particle Diameter (μm) | 10 | 1.30 | 2.42 |
|  | 15 | 0.85 | 2.23 |
|  | 25 | 0.62 | 2.02 |
|  | 45 | 0.47 | 2.13 |

Table 4

|  | Grinding Time (Min) | Referential Example 1 Premix (A) | Referential Example 2 Premix (B) | Comparative Example 2 Premix (D) |
|---|---|---|---|---|
|  |  | Pyraflufen-Ethyl | Diflufenican | Pyraflufen-Ethyl + Diflufenican |
| Change in Particle Diameter (μm) | 15 | 0.85 | 0.30 | 5.62 |
|  | 45 | 0.47 |  | 5.14 |
|  | 150 |  |  | 5.01 |

[Table 5]

| | Grinding Time (Min) | Example 4 Premix (E) | Comparative Example 4 Premix (F) Flubendiamide |
|---|---|---|---|
| Change in Particle Diameter (μm) | 0 | 48.8 | 48.8 |
| | 15 | 5.51 | 23.7 |
| | 45 | 0.92 | 8.12 |
| | 150 | | 7.90 |

As is clear from the results shown in Tables 3, 4 and 5, the premixes of Referential Example 1, Referential Example 2, and Example 4 according to the present invention were pulverized in a shorter time than that for the premixes of Comparative Examples 1, 2 and 4. In contrast, in the case of the premixes of Comparative Examples 1, 2 and 4 obtained by grinding in an oily dispersion medium, a longer time was required for pulverization than that in water, and pulverization did not proceed even though the grinding time was lengthened.

As described above, the composition of the present invention, which is produced by suspending an agrochemical active ingredient-containing suspension obtained by pulverizing a solid active ingredient in an oily dispersion medium together with adjuvants such as a suitable emulsifier and thickener, is a formulation that has excellent suspensibility in water when diluted with water, exhibits little separation of the oily phase, and has improved storage stability without deterioration in quality even after long-term storage.

Test Example 5. Test of foliar treatment effect against *Galium spurium var. echinospermon*

A resin vat having a test treatment area of 2,500 cm$^2$ was filled with diluvial clay loam, where seeds of *Galium spurium var. echinospermon* were evenly planted. Then, the plants were grown under controlled conditions in a greenhouse. When the test weeds grew to the 4-leaf stage, they were treated with a predetermined effective dose of the OD prepared in accordance with Example 1, the OD prepared in accordance with Comparative Example 1, or the SC prepared in accordance with Comparative Example 3. Then, the plants were grown in the greenhouse. 6 days after the treatment, the control effect was evaluated. The control effect was determined in accordance with a 100-point method (on a scale of 0 (equal to untreated) to 100 (completely withered)) through evaluation by the naked eye.

Table 6

| Dosage Form (Pyraflufen-Ethyl) | Amount of Active Ingredient g/ha | Control Effect Evaluated Value |
|---|---|---|
| OD (Example 1) | 5 | 25 |
| Conventional OD (Comparative Example 1) | 5 | 10 |
| SC (Comparative Example 3) | 5 | 5 |
| Control | 0 | 0 |

In the test of foliar treatment effect against *Galium spurium var. echinospermon,* the OD prepared in accordance with Example 1 exhibited a control effect higher than those of the OD prepared in accordance with Comparative Example 1 and the SC prepared in accordance with Comparative Example 3.

Test Example 6. Insecticidal test against *Chilo suppressalis*

Chinese cabbage leaves were immersed for about 30 seconds in a chemical solution obtained by diluting the OD formulation containing flubendiamide prepared in accordance with Example 4 and the SC formulation containing flubendiamide prepared in accordance with Comparative Example 5 to a predetermined concentration and air-dried, and then placed in a plastic petri dish with a diameter of 9 cm. The leaves were infested with third-instar *Chilo suppressalis* larvae, and then allowed to stand in a thermostatic chamber at 25°C and 70% humidity. 7 days after the immersion in the chemical solution, the number of living insects was examined, and correction abnormality + mortality, corrected mortality, and damaged area were calculated based on the following formulae and criteria; 10 insects per lot, no replication. The results are shown in Table 7.

(Formula 1)

Correction abnormality + mortality (%) = {(ratio of normal insects in the control plot − ratio of normal insects in the treated plot)/ratio of normal insects in the control plot} × 100

(Formula 2)

Corrected mortality (%) = {(number of normal parasites in the untreated plot − number of normal parasites in the treated plot)/number of normal parasites in the untreated plot} × 100

Damaged area

Evaluation criteria:
-     ...    0 to 5%
+     ...    5 to 10%
++     ...    10 to 20%
+++     ...    20 to 50%
++++     ...    50 to 80%
+++++     ...    80 to 100%

Table 7

| Dosage Form (Flubendiamide) | Concentration (ppm) | Correction Abnormality + Mortality | Corrected Mortality | Damaged Area |
|---|---|---|---|---|
| OD (Example 4) | 0.100 | 100 | 100 | - |
| | 0.030 | 100 | 100 | - |
| | 0.010 | 100 | 90 | - |
| | 0.003 | 90 | 70 | + |
| sc (Comparative Example 5) | 0.100 | 100 | 100 | - |
| | 0.030 | 90 | 90 | + |
| | 0.010 | 40 | 40 | ++++ |
| | 0.003 | 40 | 40 | ++++ |
| Control | | 0 | | +++++ |

In the insecticidal test against *Chilo suppressalis,* the control effect of the OD prepared in accordance with Example 4 exhibited an insecticidal effect higher than that obtained using the SC prepared in accordance with Comparative Example 5.

Test Example 7. Test of control effect against *Plutella xylostella*

Heading cabbages (brand: *Okina*) were prepared, and the petiole base was infested with 100 *Plutella xylostella* eggs. 4 days after the infestation, each of the OD formulation containing flubendiamide prepared in accordance with Example 4 and the SC formulation containing flubendiamide prepared in accordance with Comparative Example 5 was diluted with water to a predetermined concentration, and the chemical was applied only to the front of the leaves, with the back of the leaves being infested with hatched larvae. 7 days after the application, the number of parasites was examined. The results are shown in Table 8.

## (Formula 3)

$$\text{Control ratio (\%)} = 100 - \{(Ta \times Cb)/(Tb \times Ca)\} \times 100$$

Ta = the number of parasites in the treated plot after the chemical treatment

Tb = the number of parasites in the treated plot before the chemical treatment

Ca = the number of parasites in the untreated plot after the chemical treatment

Cb = the number of parasites in the untreated plot before the chemical treatment

Table 8

| Dosage Form (Flubendiamide) | Concentration (ppm) | Dose (gai/ha) | 7 days after Treatment Number of Parasites/Plant | | Total | Control Ratio (%) |
|---|---|---|---|---|---|---|
| | | | Treated Plot | | | |
| | | | 1 | 2 | | |
| OD (Example 4) | 50 | 50 | 1 | 2 | 3 | 97 |
| SC (Comparative Example 5) | 50 | 50 | 16 | 30 | 46 | 57 |
| Control | - | | 50 | 58 | 108 | - |

In the test of control effect against *Plutella xylostella,* the control effect of the OD prepared in accordance with Example 4 exhibited a control ratio higher than that obtained using the SC prepared in accordance with Comparative Example 5.

Example 5.

42.33 parts of metaflumizone as a drug substance (active ingredient), 1 part of a polyoxyethylene alkyl ether (trade name "D-1103" from Takemoto Oil & Fat Co., Ltd.), 10 parts of polyoxyethylene aryl phenyl ether phosphate potassium salt, 1.5 parts of a dialkyl sulfosuccinate (trade name "NEOCOL YSK" from DKS Co., Ltd.), 0.1 part of polydimethylsiloxane (trade name "KM-73" from Shin-Etsu Chemical Co., Ltd.), 0.1 part of 1,2-benzisothiazolin-3-one (trade name "PROXEL GXL(S)" from Arch Chemical, Inc.), 0.01 part of a heteropolysaccharide (trade name "RHODOPOL 23" from Solvay Nicca, Ltd.), and 44.96 parts of water were mixed in a dissolver, and then the mixture was subjected to wet grinding in DYNO-MILL under the same conditions as in Referential Example 1 to adjust the particle diameter of the active ingredient to 1 $\mu$m, thus giving a premix (G).

25 parts of the premix (G), 12 parts of a mixture of a polyoxyethylene sorbitol fatty acid ester and dioctyl sulfosuccinate calcium salt (trade name "SORPOL 4315" from Toho Chemical Industry Co., Ltd.), 2 parts of organic bentonite (trade name "S-BEN NX80" from Hojun, Co., Ltd.), and 61 parts of methyl oleate were mixed in a dissolver, thus giving an OD of Example 5.

Comparative Example 6.

25 parts of the premix (G), 2 parts of polyoxyethylene aryl phenyl ether phosphate potassium salt, 0.23 part of a heteropolysaccharide (trade name "RHODOPOL 23" from Solvay Nicca, Ltd.), 0.05 part of polydimethylsiloxane (trade name "KM-73" from Shin-Etsu Chemical Co., Ltd.), 0.05 part of 1,2-benzisothiazolin-3-one (trade name "PROXEL GXL(S)" from Arch Chemical, Inc.), 8 parts of propylene glycol, and 64.67 parts of water were mixed in a dissolver, thus giving an SC of Comparative Example 6.

Test Example 8. Insecticidal test against *Spodoptera litura*

Each of the OD formulation containing metaflumizone prepared in accordance with Example 5 and the SC formulation containing metaflumizone prepared in accordance with Comparative Example 6 was diluted to a predetermined concentration, and the chemical was foliar applied in a Chinese kale (*Brassca oleracea var. alboglabra*) test plot (4 m × 5 m, 800 plants per plot) 8 times at 4-day intervals. Twenty plants per plot were randomly extracted, and the number of living insects was examined before the chemical application treatment, and the number of parasitic larvae was examined 4 days after the fifth chemical treatment and 4 days after the sixth chemical treatment. Correction abnormality + mortality, corrected mortality, and damaged area, compared to the number of larvae before the chemical treatment, were calculated based on the same formulae and criteria as those in Test Example 5. The results are shown in Table 9.

Table 9

| Dosage Form (Metaflumizone) | Concentration (ppm) | Correction Abnormality + Mortality | Corrected Mortality | Damaged Area |
|---|---|---|---|---|
| OD (Example 5) | 30 | 100 | 100 | + |
| | 3 | 100 | 30 | ++ |
| SC (Comparative Example 6) | 30 | 100 | 100 | + |
| | 3 | 60 | 10 | ++++ |
| Control | | 0 | | +++++ |

In the insecticidal test against *Spodoptera litura,* the control effect of the OD prepared in accordance with Example 5 exhibited an insecticidal effect higher than that obtained using the SC prepared in accordance with Comparative Example 6.

As described above, the composition of the present invention, which was produced by suspending an agrochemical active ingredient-containing suspension obtained by pulverizing a solid active ingredient in an oily dispersion medium together with adjuvants such as a suitable emulsifier and thickener, was confirmed to be a formulation having an improved biological effect compared to an aqueous suspension composition.

**Claims**

1. An oily suspension composition **characterized by** comprising (A) a suspension comprising an active ingredient pulverized in water, (B) an emulsifier, (C) a thickener, and (D) an oily dispersion medium.

2. The oily suspension composition according to claim 1, **characterized in that** the emulsifier (B) is at least one emulsifier selected from polyoxyalkylene sorbitol fatty acid esters and polyoxyalkylene castor oils.

3. The oily suspension composition according to claim 1 or 2, wherein the thickener (C) is bentonite.

4. The oily suspension composition according to any one of claims 1 to 3, wherein the oily dispersion medium (D) is at least one dispersion medium selected from vegetable oils, animal oils, and ester compounds thereof.

5. The oily suspension composition according to any one of claims 1 to 4, wherein the active ingredient pulverized in water is a solid active ingredient.

6. The oily suspension composition according to any one of claims 1 to 5, wherein the active ingredient pulverized in water is a solid agrochemical active ingredient that is poorly soluble in water and oils.

7. The oily suspension composition according to any one of claims 1 to 6, wherein the active ingredient pulverized in water is an agrochemical active ingredient, which is a solid organic compound that is poorly soluble in water and oils.

8. The oily suspension composition according to any one of claims 1 to 6, wherein the active ingredient pulverized in water is an agrochemical active ingredient, which is a solid inorganic compound that is poorly soluble in water and oils.

9. The oily suspension composition according to any one of claims 1 to 8, wherein the oily dispersion medium (D) is at least one dispersion medium selected from soybean oil, rapeseed oil methyl ester, and methyl oleate.

10. The oily suspension composition according to any one of claims 1 to 9, wherein the active ingredient pulverized in water is sulfur, basic copper sulfate, pyraflufen-ethyl, flubendiamide, tolfenpyrad, fluoroimide, flutolanil, fenoxanil, tiadinil, buprofezin, isoprocarb, fenobucarb, fenpyroximate, tebufenpyrad, pyrifluquinazon, chlorphthalim, indanofan, isouron, orthosulfamuron, pyriprole, pyflubumide, pyraziflumid and 5-(1,3-dioxan-2-yl)-4-[4-(trifluoromethyl)]benzyloxypyrimidine, or metaflumizone.

11. The oily suspension composition according to any one of claims 1 to 10, wherein the active ingredient pulverized in water is pyraflufen-ethyl, flutolanil, fenpyroximate, orthosulfamuron, flubendiamide, or metaflumizone.

12. A method for producing the oily suspension composition according to any one of claims 1 to 11, **characterized by** comprising the steps of:

(a) subjecting a mixture comprising an active ingredient and water to wet grinding to obtain a suspension (A) comprising the active ingredient pulverized in water; and
(b) mixing the suspension (A) obtained in the step (a) with an emulsifier (B), a thickener (C), and an oily dispersion medium (D).

13. The method for producing the oily suspension composition according to claim 12, wherein the active ingredient is pulverized to an average particle diameter of 0.1 to 5 $\mu$m by the wet grinding in the step (a).

14. The method for producing the oily suspension composition according to claim 12 or 13, wherein the active ingredient pulverized in water is a solid agrochemical active ingredient.

15. An agrochemical comprising the oily suspension composition according to any one of claims 1 to 11.

## INTERNATIONAL SEARCH REPORT

| International application No. |
|---|
| PCT/JP2016/053980 |

**A. CLASSIFICATION OF SUBJECT MATTER**
*A01N25/04*(2006.01)i, *A01N41/10*(2006.01)i, *A01N43/56*(2006.01)i, *A01P7/00*
(2006.01)i, *A01P13/00*(2006.01)i, *A01N43/40*(2006.01)n

According to International Patent Classification (IPC) or to both national classification and IPC

**B. FIELDS SEARCHED**

Minimum documentation searched (classification system followed by classification symbols)
A01N25/04, A01N41/10, A01N43/56, A01P7/00, A01P13/00, A01N43/40

Documentation searched other than minimum documentation to the extent that such documents are included in the fields searched
| Jitsuyo Shinan Koho | 1922–1996 | Jitsuyo Shinan Toroku Koho | 1996–2016 |
| Kokai Jitsuyo Shinan Koho | 1971–2016 | Toroku Jitsuyo Shinan Koho | 1994–2016 |

Electronic data base consulted during the international search (name of data base and, where practicable, search terms used)
CAplus/REGISTRY(STN)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 11-019497 A (Mitsubishi Chemical Corp.),<br>26 January 1999 (26.01.1999),<br>paragraph [0014]; examples 1 to 5<br>(Family: none) | 1,4,5<br>2,3<br>6-15 |
| Y<br>A | JP 2011-46670 A (Kao Corp.),<br>10 March 2011 (10.03.2011),<br>paragraph [0024]<br>(Family: none) | 2,3<br>1,4-15 |
| Y<br>A | Shigeru SEKINE et al., Keshohin Genryo Jiten,<br>Nikko Chemicals Co., Ltd., Tokyo-To Chuo-Ku<br>Nihonbashi Bakurocho 1-4-8, Nihon Surfactant<br>Kogyo Kabushiki Kaisha, Tokyo-To Itabashi-Ku<br>Hasune 3-24-3, Toshiki Pigment Co., Ltd.,<br>Tokyo-To Katsushika-Ku Tateishi 6-37-14, 29<br>November 1991 (29.11.1991), pages 398, 419 | 2,3<br>1,4-15 |

| ☒ Further documents are listed in the continuation of Box C. | ☐ See patent family annex. |

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>06 May 2016 (06.05.16) | Date of mailing of the international search report<br>17 May 2016 (17.05.16) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

International application No.

PCT/JP2016/053980

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2014-028796 A  (Ishihara Sangyo Kaisha, Ltd.), <br> 13 February 2014 (13.02.2014), <br> example 4 <br> & US 2015/0216165 A1 <br> example 4 <br> & WO 2014/003202 A1      & EP 2866556 A1 <br> & AU 2013281629 A        & AR 91568 A <br> & CN 104411171 A         & EA 201590128 A <br> & KR 10-2015-0032565 A   & CO 7180223 A <br> & MX 2014015789 A        & CR 20140579 A <br> & PE 8772015 A | 1-15 |
| A | JP 11-255602 A  (Nippon Soda Co., Ltd.), <br> 21 September 1999 (21.09.1999), <br> examples 1 to 14 <br> (Family: none) | 1-15 |
| A | JP 2006-199716 A  (Wyeth Holdings Corp.), <br> 03 August 2006 (03.08.2006), <br> example 1; table II <br> & JP 8-40809 A           & US 5496845 A <br> & EP 683979 A2           & DE 69510729 C <br> & DE 69510729 T          & NO 952061 A <br> & AU 2019695 A           & NZ 272184 A <br> & PL 308737 A            & ES 2133672 T <br> & BG 99665 A             & BR 9502522 A <br> & TR 28583 A             & EG 20392 A <br> & HU 73158 A             & ZA 9504215 A <br> & AT 182048 T | 1-15 |
| A | JP 9-235203 A  (Nihon Nohyaku Co., Ltd.), <br> 09 September 1997 (09.09.1997), <br> example 3 <br> (Family: none) | 1-15 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001316202 A
- JP H06056602 B
- JP H06056602 A